# EUROPEAN PATENT APPLICATION

(11) **EP 1 077 437 A2**
(43) Date of publication of application: **21.02.2001**
(21) Application number: 00305718.9
(22) Date of filing: 06.07.2000
(51) Int. Cl.: G07F 19/00, G06F 17/60

(54) **Method and system for distributing electronic coupons using a wireless communications system.**

(30) Priority: 07.07.1999 US 142613 P; 03.12.1999 US 454478
(71) Applicant: Phone.Com Inc., Redwood City, CA 94063 (US)
(72) Inventor: Linder, Ben H., Menlo Park, CA 94025 (US); Laursen, Andrew L., San Mateo, CA 94402 (US); Jeffrey, Maurice A., Los Altos, CA 94022 (US)
(74) Representative: Ablett, Graham Keith

(57) **Abstract**

A system and method for utilizing a two-way mobile communications device (200) having a display (204) and a user interface (216) to retrieve geographically indexed electronic coupons. A request for electronic coupons is forwarded to a coupon distribution server (400) which acts as a warehouse for electronic coupons from a plurality of sponsors associated with a plurality of geographic areas. The user-initiated request for electronic coupons includes location information for the requesting two-way mobile communications device and user supplied information. The device location information may be provided by the requesting two-way mobile communications device or a network element associated with the requesting two-way mobile communications device (Visitor Location Register (VLR)). Requested electronic coupons are forwarded to the requesting device where they are stored and concurrently, the distributed electronic coupon is registered with a proprietary server device (600) associated with the sponsor. The coupon is redeemed when the customer presents either coupon identifier or personal identification at the sponsor's point of sale (POS) terminal.

## Description

### BACKGROUND OF THE INVENTION

### 1. Field of the Invention

The present invention relates to wireless communication systems and, more particularly, to a system and method for using wireless communications systems to deliver electronic coupons.

### 2. Description of the Related Art

There are already several hundred million subscribers of wireless communication services throughout the world. With this proliferation of wireless communications, it is becoming more and more likely that parties will interact with one another in instances where the only means of communication for one or both is through wireless communications. The communications between the parties can be social or business related. Wireless communication is achieved when at least one party is making use of a wireless communication device and a wireless network. Wireless communication devices can, for example, include personal digital assistants (PDAs), two-way pagers, mobile (including cellular) phones and palm-sized computing devices.

Businesses wish to distribute promotional offers and money-saving coupons to large groups of *potential customers.* Coupon distribution programs are costly to manufactures and service providers and the effectiveness of such programs often times do not justify the associated costs. There are costs related to obtaining customer databases, mailing and distribution costs and the costs associated with providing the coupon benefit (e.g. a discount). Quite often the intent of these programs is to introduce potential customers to a product or service which they will continue to use after the initial introduction. Significant numbers of coupons delivered to customers not likely to take advantage of the discounts and services provided represent fiscal waste to the program sponsors.

To address the problems described above many manufacturers and service providers have implemented targeted marketing programs so that coupon resources are directed to those customers who are likely to partake of the offers provided. An example of such a program is described in U.S. Patent 5,592,560.

An excellent indicator that a customer is interested in a product or service offered in a coupon is their presence in a retail establishment associated with the product or service described in the subject coupon. For example, consumers are more interested in grocery store coupons when they are at the grocery store therefor manufacturers of such products distribute a considerable portion of their coupons at grocery stores.

Another excellent indicator that a customer is interested in a product or service offered in a coupon is that they specifically request a coupon for the particular product or service. For example, consumers making airline reservations quite often seek out coupons to lower their airfares. It is not unusual for travellers to select one airline over another airline based on a lower price resulting from the use of a coupon.

Cellular telephone service providers, as one type of wireless carrier, have for years been able to generate location information for mobile devices in a given cellular service area. The accuracy of this location information varies depending on the type of position determining technology used (e.g., Time Distance of Arrival (TDOA) based system or Global Positioning System (GPS)). The location information has been used to track mobile devices as they move within various cellular service areas. Location information has also been used in the past to automatically provide location information to emergency services or a designated contact, see U.S. Patent 5,835,907. However, as yet, such location information is not generally used by carriers to generate revenue.

### SUMMARY OF THE INVENTION

The present invention relates to improved techniques that facilitate the usage of location information to distribute electronic coupons to two-way mobile communication devices. The invention includes various aspects. One aspect of the invention is that two-way mobile communications devices are able to display lists of coupons and coupon categories wherein the lists presented to the users are based in part on the location of the user's two-way mobile communications device. Another aspect of the present invention is that the user of the two-way mobile communications device displaying the lists can select one or more coupons from the lists displayed and have coupon usable content (e.g. a coupon registration number) delivered to the subject two-way mobile communications device. Still another aspect of the present invention is that the coupon usable content delivered to the subject two-way mobile communications device is registered with a proprietary server device for verification of the coupon useable content delivered to the subject two-way mobile communications device. Still another aspect of the present invention, is that coupon program sponsors can notify the users of two-way mobile communication devices of the availability of selected coupons when their two-way communications device is in proximity to a coupon redemption establishment (e.g. a retail store).

These aspects can be provided individually or in combination. In one embodiment, these aspects are beneficially applied to provide geographically based coupon and coupon category lists to two-way mobile communications devices located within a pre-determined geographical area which may or may not be larger than the two-way mobile communications device service area.

The advantages of the invention are numerous. Different embodiments or implementations may yield one or more of the following advantages. One potential advantage of the invention is that users can receive only those coupons that they have particular interests in. Another potential advantage of the invention is that the requested coupon information (e.g. a registration number) is stored in the user's two-way mobile communications device and may be read to or shown to a service person when making a coupon based transaction. Another potential advantage of the invention is that requested coupons are registered with proprietary servers to prevent coupon fraud. Still another potential advantage of the invention is that information relating to the user requesting the subject coupons and information gathered at a Point of Sale Terminal (POS) may be combined in a single proprietary database and used for future marketing activity and coupon program evaluation. Yet still another advantage of the invention is that the wireless carriers may benefit financially and commercially from distributing coupons in this fashion.

Other aspects and advantages of the invention will become apparent from the following detailed description taken in conjunction with the accompanying drawings, which illustrate, by way of example, the principles of the invention.

### BRIEF DESCRIPTION OF THE DRAWINGS

The present invention will be readily understood by the following detailed description in conjunction with the accompanying drawings, wherein like referenced numerals designate the structural elements, and in which:
Figure 1 illustrates a communications system, which may be utilized to practice the present invention;
Figures 2A-2E illustrates a schematic of a two-way mobile communications device according to an embodiment of the present invention;
Figure 3 illustrates a block diagram of the principle components of an exemplary two-way mobile communications device;
Figure 4 schematically illustrates the relationship between the coupon distribution server and the other system components;
Figure 5 schematically illustrates the relationship between the two-way mobile communications device and the coupon distribution server device;
Figure 6 schematically illustrates the relationship between the two-way proprietary server device and the coupon distribution server device;
Figure 7 is a flow chart, which describes electronic coupon related list requests initiated by the two-way mobile communications device;
Figure 8 is a flow chart, which describes electronic coupon request processing by the coupon distribution server device; and
Figure 9 is a flow chart, which describes electronic coupon registration process.

### DETAILED DESCRIPTION OF THE INVENTION

The invention pertains to systems and methods which enable electronic coupon distribution to two-way mobile communication devices having a display screen and user interface. A wireless communications network is used to communicate with the two-way mobile communication devices. The wireless communications network is coupled to also communicate with a coupon distribution server by way of a communications link or network, such as telecommunications link or network, intranet, internet, data network or the like. Information pertaining to coupons can then be provided to the two-way mobile communications devices from the coupon distribution server, as is described in greater detail herein below.

According to one embodiment of the present invention, a request for coupon lists for a particular geographic area is forwarded from a two-way mobile communications device to the coupon distribution server which holds coupon lists for a plurality of geographic areas.

The request may be forwarded through a proxy server device, which acts as a trusted third party in authenticating the principal participants. The request for coupon lists may include information input by the user using the user interface and device location information based on internal device location information (e.g. GPS) or network-based device location information (e.g. Time Distance of Arrival (TDOA)). User input information may include personal identification information and financial information (e.g. credit card numbers, bank account numbers etc.) requiring verification by an outside processing entity (e.g. TRW). Upon verification of the supplied information (if required) the coupon distribution server processes the request for coupon lists. Coupon lists corresponding to the location of the requesting two-way mobile communications device are forwarded to the requesting device. If any of the coupons listed on the received lists is of interest to the user, then the user may use the device user interface to request the electronic coupon of interest.

Alternatively, coupon information including lists of downloadable coupons, coupons, or specific promotion offers may be pushed or pulled to the requesting two-way mobile communications device through a narrow-band data communications channel (e.g. Short Message Service (SMS)) or a wideband communications channel.

The two-way mobile communication device, also referred to as two-way interactive communication devices, wireless client devices, and mobile devices, include but are not limited to personal digital assistants, palm-sized computing devices, cellular phones, two-way pagers and wireless capable remote controllers. Such devices typically have significantly less memory and processing capability than is found in desktop and laptop computers. These mobile devices typically have a small display screen and a keypad with a reduced character set, as opposed to the full function keyboards and monitors associated with desktop or laptop computers.

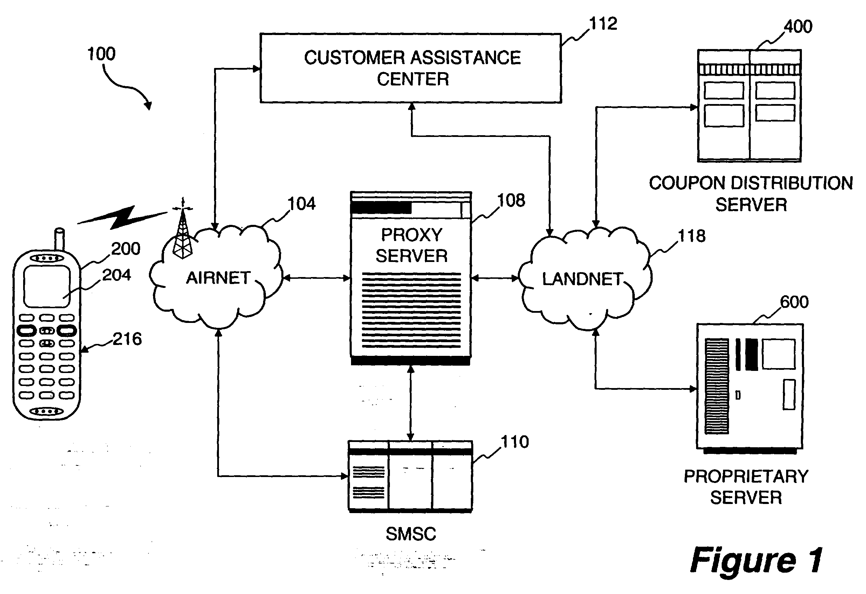

Embodiments of the invention are discussed below with reference to Figures 1-9. However those skilled in the art will readily appreciate that the detailed description given herein with respect to these figures is for exemplary purposes as the invention extends beyond the embodiments discussed below.

To facilitate a full understanding of the present invention, it is beneficial to firstly describe some of the features of a communications system in which embodiments of the invention may be practised. Referring to Figure 1 a block diagram of a typical communications system 100 according to one embodiment of the present invention is displayed. A mobile device 200 receives phone calls through a voice communications channel and is also capable of receiving and transmitting data such as hypermedia information through broad-band and/or narrow-band (e.g. SMS) data communications channels. The hypermedia information may include, for example, Hyper Text Markup Language (HTML) documents, Compact Hypertext Transport Protocol (cHTML) documents, Extensible Markup Language (XML) documents, Handheld Device Markup Language (HDML) documents, and/or Wireless Markup Language (WML) documents from remote server devices such as a proxy server device 108 and Short Message Service center (SMSC) 110 illustrated in Figure 1. Mobile device 200 has a display 204 and a user entry interface 216. Additionally, mobile device 200 may have a micro-browser (e.g. a micro-browser from Phone.com, Inc. 800 Chesapeake Drive, Redwood City, CA, 94063) stored in a local memory which enables it to process hypermedia information received from remote server devices.

Information is exchanged between mobile device 200 and remote server devices such as a coupon distribution server 400 and a proprietary server 600 using a wireless communications network ("airnet") 104 and a data capable link or network ("landnet") 118. Airnet 104 may be, for example, a cellular digital packet data network (CDPD), a Global System for Mobile (GSM) network, a Code Division Multiple Access (CDMA) network, a Time Division Multiple Access (TDMA) network, a Personal Digital Cellular (PDC) network or a Personal Handy-phone System (PHS) network. The communications protocols supported by airnet 104 may, for example, be Wireless Access Protocol (WAP), Hypertext Transport Protocol (HTTP) or Handheld Device Transport Protocol (HDTP). Landnet 118 is preferably a land-based data capable communications network that may be the Internet, an Intranet or a data network of any private network. Typically the communication protocol supporting landnet 118 may be Transmission Control Protocol (TCP/IP), Hypertext Transport Protocol (HTTP), and/or Secure Hypertext Transport Protocol (sHTTP).

The data communication path between airnet 104 and landnet 118 may be bridged by proxy server device 108, which coordinates the exchange of information on the wide-band and narrow-band communications channels providing communication with mobile device 200. The narrow-band channel may be used for the exchange of content requiring limited bandwidth transmission services (e.g. Short Message Service (SMS)) and the wide-band channel is used for all other exchanges. An additional server device (e.g. Short Message Service Center (SMSC)) 110 generally coordinates communications on the narrow-band channel.

Proxy server device 108 and SMSC 110 may be, for example, a SPARC workstation from Sun Microsystems, Inc.(www.sun.com). As previously stated proxy server device 108 acts as a bridge between airnet 104 and remote devices connected by landnet 118. It should be pointed out, however, that the functions of proxy server device 108 and SMSC 110 may be performed by any network server devices connected to landnet 118 with hardware well known in the art providing the connection between airnet 104 and landnet 118.

According to one embodiment of the present invention, mobile device 200 has pre-installed applications which, when activated, cause content to be displayed on display screen 204 of mobile device 200. The content displayed provides assistance and information relating to interactions with the remote server devices providing services. One of the services available relates to interactions with coupon distribution server 400. If a user provides an input using user entry interface 216, which indicates a desire to obtain geographic based coupon services, then a request is generated and forwarded to coupon distribution server 400 via proxy server device 108. Incorporated in the request forwarded to coupon distribution server 400 is location information for mobile device 200. The location information may originate from mobile device 200 (e.g. a GPS location) or from network elements (e.g. Visitor Location Register (VLR)) housing such information.

Coupon distribution server 400 processes the request received from mobile device 200 and forwards one or more coupon files containing content relating to one or a number of available geographically indexed electronic coupons supplied by a number of sponsors. More specifically, the geographically indexed electronic coupons forwarded to mobile device 200 will be for establishments and services available in proximity to the location information provided with the request. Sponsors may supply electronic coupons to coupon distribution server 400 via landnet 118.

According to one embodiment, the coupon files containing coupon related content are presented in a markup language and downloaded and processed in mobile device 200. Viewable content such as categories of available coupons (e.g. choice lists) and additional information are displayed on display screen 204. Screen display navigation and coupon selection is accomplished using user entry interface 216. Upon selection of a particular coupon, a request for that coupon is generated and forwarded to coupon distribution server 400. Coupon distribution server 400 receives the request and forwards a markup language file containing the requested electronic coupon to mobile device 200. Additionally, coupon distribution server 400 may forward coupon registration and user information to proprietary server 600 upon the markup language file being forwarded to the mobile device. The registration information may be used to validate the electronic coupon when redeemed or to provide sponsors with information about the transaction (e.g. customer related information).

Optionally, mobile device 200 is pre-provisioned with the content required to communicate with a Customer Assistance Center 112 via data and/or voice communications channels. The Customer Assistance Center 112 provides additional services relating to coupon inquiries and general information (e.g. directions) relating to the electronic coupons.

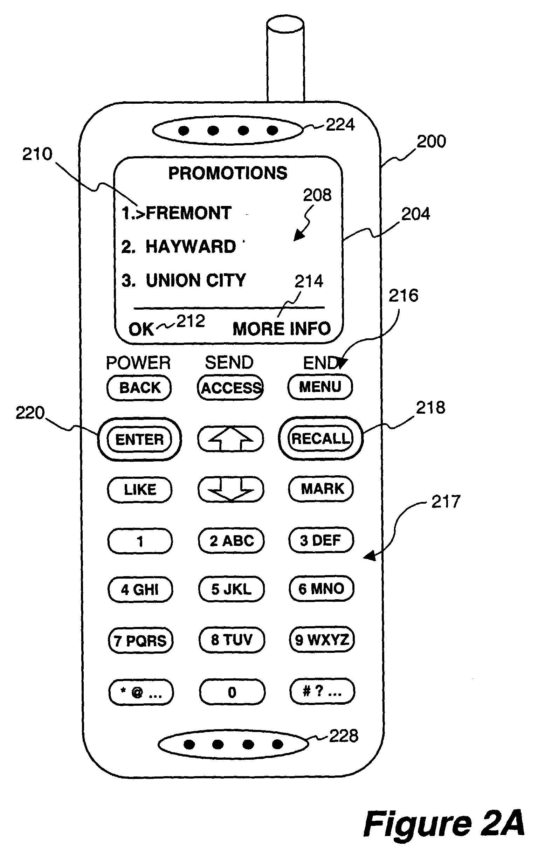

With reference now to Figures 2A-2E, the is shown a front view of an exemplary mobile device 200 (e.g. a cellular telephone, a two-way pager, a personal digital assistant, or a palm-sized computer) which comprises a display screen 204, a user entry interface 216, a speaker 224 and microphone 228. Referring specifically to Figure 2A, display screen 204 displays hyper media information 208, a selection identifier or cursor ">" 210 and softkey identifiers 212 and 214. Typically, user entry interface 216 comprises a number of function keys (e.g. "MENU", "BACK"), a commonly seen phone keypad 217, and a few navigation keys (↑ and ↓). Function keys 218 and 220 are used for activating the softkey identifier functions and the navigation keys are used for repositioning the cursor. It should be pointed out that the function keys and navigation keys are not necessary to practice the present invention, and they may be mapped respectively to keys in keypad 217. However, they provide a preferred and efficient means for a user to interact with mobile device 200. In addition, there may be other implementations of a user entry interface that may include a miniature keyboard or a voice-activated mechanism.

Hypermedia information 208 is illustrative of the type of an entry screen utilized to interact with a coupon distribution server (400 of Figure 1). The hypermedia information 208 shown in Figure 2A includes a plurality of selectable identifiers corresponding to geographic areas for which electronic coupons are available. The list of geographic areas displayed is related to the location information for the mobile device 200 provided (e.g. by GPS or network location identification) to the coupon distribution server. In this case each of the identifiers of the hypermedia information 208 displayed corresponds to a respective geographic area to the east of San Francisco bay. Each of the identifiers is associated with a Uniform Resource identifier (URI), and the associated URIs may be all for the same coupon distribution server device (400) or they can relate to different distribution server devices. The navigation keys (↑ and ↓) are used to navigate the list of selectable identifiers where hypermedia selection identifier ">" 210 indicates the selected item. Selection of "FREMONT" will cause coupon-related content to be displayed for the city of Fremont.

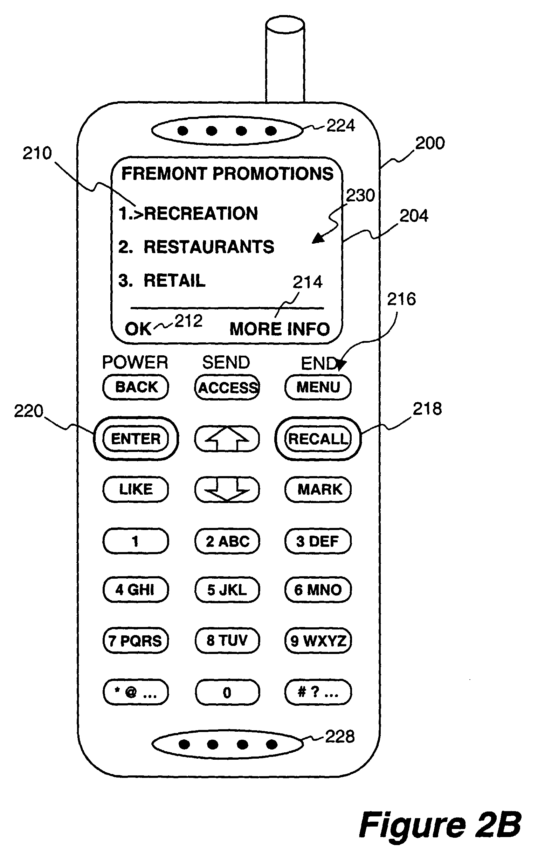

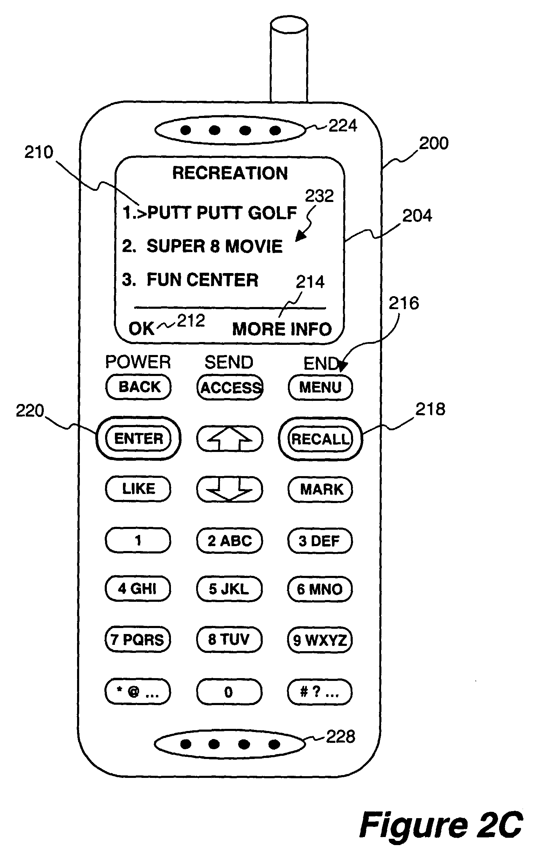

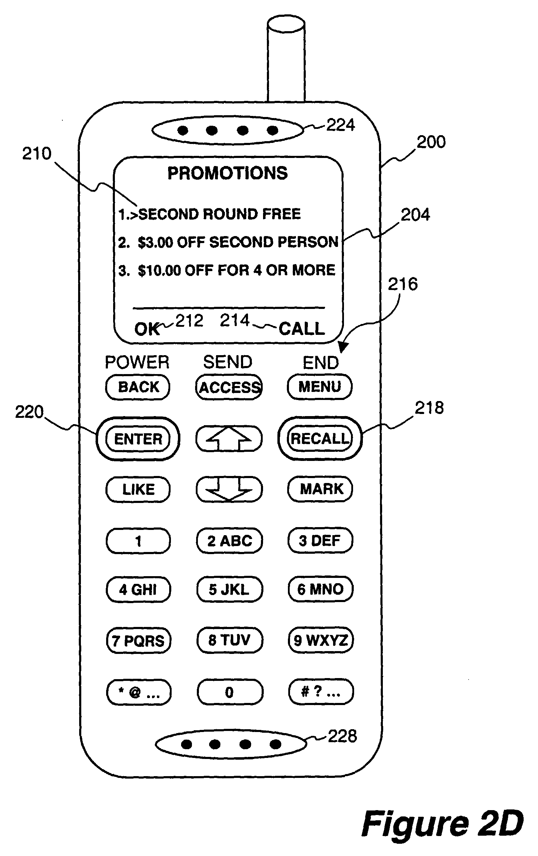

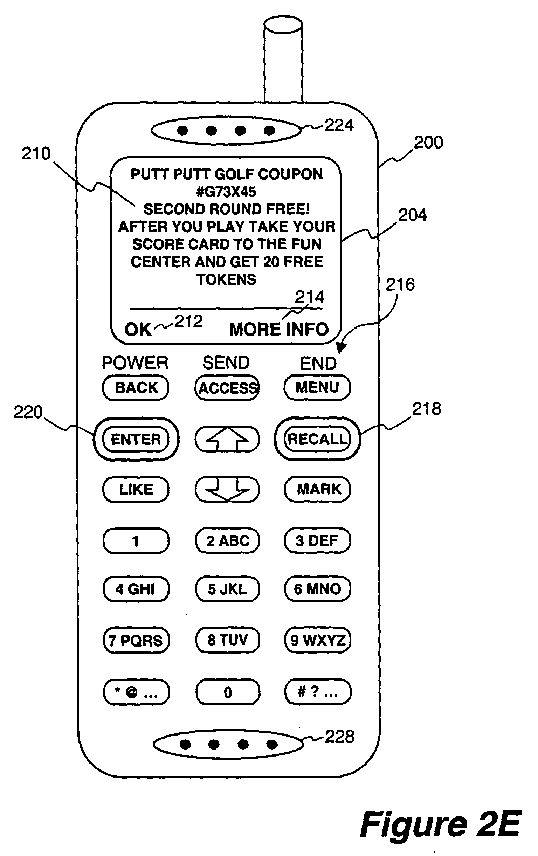

Referring to Figure 2B, hypermedia information 230 shown on screen display 204 provides the coupon categories for the selected City of Fremont. More specifically, categories for recreation, restaurants and retail are displayed. Selection of the "RECREATION" category will cause the available recreation related coupons for the city of Fremont. Referring now to Figure 2C, coupon identifiers (e.g. the name of the sponsor) in the selected "RECREATION" category are provided in the hypermedia information 232 displayed on screen display 204. Selection of "PUTT PUTT GOLF" will cause coupons and related information (e.g. an address) associated with the selected coupon identifier to be displayed as shown in Figure 2D. Finally, as shown in Figure 2E, selection of a particular coupon causes coupon verification information (e.g. a registration number) to be displayed after processing by the coupon distribution server.

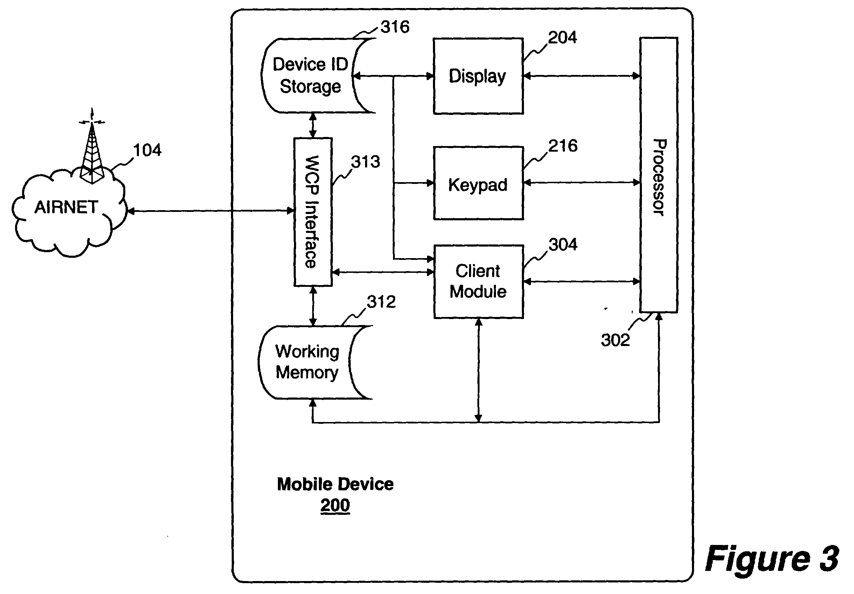

A block diagram of the principal functional components of an exemplary mobile device 200 is illustrated in Figure 3 and described herein below. The mobile device 200 includes a Wireless Control Protocol (WCP) interface 313 that communicates with a carrier network via airnet 104 through incoming and outgoing signals. A device identifier (ID) storage 316 stores and supplies a device ID to WCP interface 313 for the purpose of identifying mobile device 200 to outside entities (e.g. proxy server device 108 of Figure 1). The device ID identifies a specific code that is associated with mobile device 200 and directly corresponds to the device ID in the user account typically provided in an associated proxy server device (e.g. 108 of Figure 1). The mobile device 200 further includes a processor 302 which is coupled to the user entry interface keypad 216 and display 204. A client module 304 is also provided, that performs many of the processing tasks performed by mobile device 200, such as: establishing a communication session with a proxy server device via airnet 104, operating and maintaining local applications, displaying information on the display screen 204 thereof, and receiving user input from keypad 216. The client module 304 is coupled to WCP interface 313 for the establishment of a communication session and the requesting and receiving of data through the airnet 104. Also illustrated in the block diagram of the mobile device 200 in Figure 3 is a working memory 312 coupled to the client module 304, processor 302 and WCP interface 313, for storage of data in the mobile device as described in greater detail below.

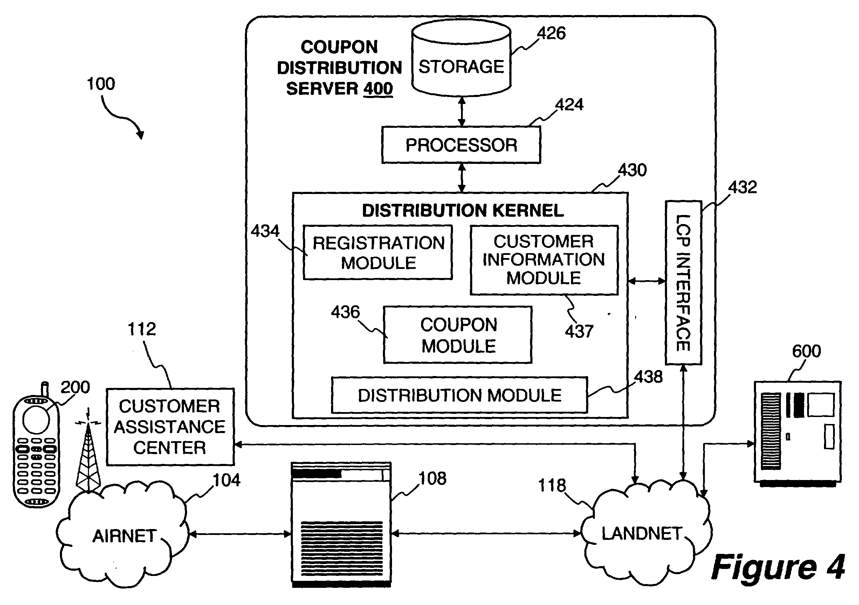

Figure 4 is another illustration of the communications system 100 which schematically shows functional components of the coupon distribution server 400 and the relationship between the coupon distribution server and the other components of the communications system. It is important to note at this point that the functions of coupon distribution server 400 may be incorporated in proxy server device 408, for example, or another device with direct or indirect access to airnet 104. The coupon distribution server 400 as shown comprises a Land Control Protocol (LCP) interface 432, processor 424, storage device 426 and a coupon distribution kernel 430 having a plurality of software modules. More specifically, the coupon distribution kernel includes a Registration Module, a Customer Information Module, a Coupon module, and a Distribution Module.

The Registration Module 434 coordinates activities relating to the registration of sponsors desiring to post electronic coupons on coupon distribution server 400 and users seeking to acquire electronic coupons from the coupon distribution server. The registration process may require participants to provide financial information (e.g. credit card or bank information). It is important to note at this point that resources required to process the registration request may be resident on the coupon distribution server receiving the request or on any server device accessible via landnet 118.

The coupon module 436 performs functions related to maintaining a database of geographically indexed electronic coupons resident on coupon distribution server 420 or on servers accessible via landnet 450. As discussed above, the coupons, which may be detailed by the sponsors during registration with the registration module, can be indexed according to the geographic region of applicability, category (e.g. recreation, restaurants, retail, etc.), the particular sponsor and the particular promotions offered by the sponsor. Additionally, coupon module 436 generates coupon files for transmission through a wireless data network. Depending on characteristics of a wireless data network, examples of the coupon files may include Hyper Text Markup Language (HTML) documents, Compact Hypertext Transport Protocol (cHTML) documents, Extensible Markup Language (XML) documents, Handheld Device Markup Language (HDML) documents, or Wireless Markup Language (WML) documents).

The coupon files from the coupon module can be generated, for example based on choice or preference information received from the customer or mobile device user. Preference information can be provided by the customer in advance, through the registration module, to provide information about the kind of promotions or particular sponsors that customer is interested in. Such preference information can be stored by the coupon distribution server for later use by the customer information module 437. The customer information module also maintains records relating to contacting the registered customers through the airnet 104 (Figure 1), such as the device ID for each customer to enable data to be routed to the customer's mobile device through the network.

Distribution module 438 performs functions related to the distribution of coupon files related to geographically indexed electronic coupons to mobile device 200 via airnet 104 and proxy server 108 and forwarding of coupon registration information (e.g. coupon information and user information) to proprietary server 600 via landnet 118. Additionally, distribution module 438 may coordinate sponsored unilateral coupon distribution programs to mobile devices resident within a pre-determined geographic area.

Customer assistance center 112 provides customer service and support to the users associated with the serviced mobile devices (e.g. mobile device 200). Users seeking coupons for other geographic areas or wishing additional information may contact customer assistance center 112 through a voice communications channel. Automated or human service representatives process the inquiries received. Request for information can be processed using recordings related to the electronic coupon registration information. Request for coupons for geographic areas outside the area indicated by the location of mobile device 200 may be input by the service representative for processing by coupon distribution server 400.

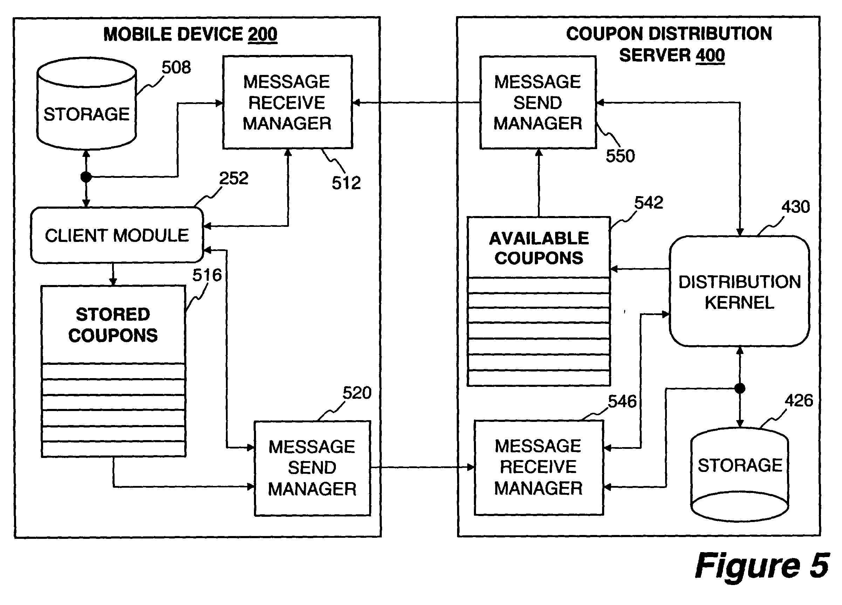

Figure 5 schematically illustrates the exchange of hypermedia information related to geographically indexed electronic coupons between a mobile device 200 and the coupon distribution server 400. In one mode of operation, mobile device 200 generates a request for lists of available electronic coupons, which is forwarded to coupon distribution server 400 via a message send manager 520 resident in mobile device 200 and a message receive manager 546 resident in coupon distribution server 400. The request for electronic coupon related information contains location information relating to the location of mobile device 200. As previously stated, the location information may be provided by mobile device 200 (e.g. GPS location information) or may be retrieved from a wireless network entity (e.g. Visitor Location Register (VLR)).

Coupon distribution server 400 queries a stored list of geographically indexed coupons 542 for content corresponding to the location information provided. Content corresponding to the location information provided is forwarded to mobile device 200 via a message send manager 550 resident in coupon distribution server 400 and a message receive manager 512 resident in mobile device 200. From the content provided a user of the mobile device 200 selects a particular electronic coupon of interest (as described, for example, in relation to Figures 2A - 2E) and forwards this request to coupon distribution server 400. Coupon distribution server 400 processes the request and forwards the requested electronic coupon to mobile device 200. Concurrently, the coupon distribution server forwards registration information to the sponsor's proprietary server (e.g. proprietary server 600 of Figure 1). It is important to note that, in the preferred implementation of the invention, the electronic coupon information (e.g. a coupon registration number) provided to mobile device 200 is not valid until registered at the sponsor's proprietary server. Registration of distributed electronic coupons in this manner provides the sponsor with user information (e.g. the user's name and/or financial information) which may be used in redeeming the coupon at a point of sale (POS) terminal and provides the sponsor with a valuable source of marketing information.

Electronic coupons received by the mobile device 200 are stored in memory storage 508 of the mobile device. A list of the electronic coupons 516 stored by the mobile device 200 is managed by applications associated with the client module 252. Management activities include deleting those coupons meeting predetermined criteria, such as a coupon which has passed a predetermined expiration date or a single use coupon that has been used. It is also possible for stored electronic coupons to be modified or augmented with associated electronic coupons in accordance with instructions received from coupon distribution server 400. Users are notified of any changes via associated communications channels (e.g. an SMS message).

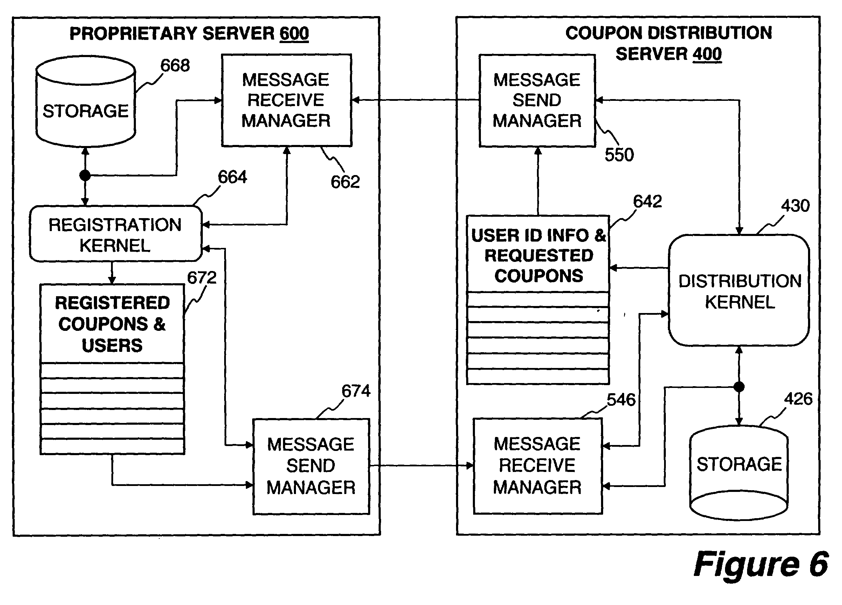

Figure 6 schematically illustrates the exchange of information between a proprietary server and coupon distribution server 400. The coupon distribution server 400 forwards coupon and user registration information to the proprietary server 600 via the coupon distribution server message send manager 550 and a message receive manger 662 of the proprietary server. The coupon distribution server and the proprietary server are interconnected by way of a landnet (e.g. the Internet or an Intranet) which is not shown in the drawing. Mutual authentication of the participants involved in the transaction are by methods well known in the art.

User information and information relating to coupons requested by the user (e.g. registration numbers) are retrieved from a database 642 in the coupon distribution server 400 and forwarded to the proprietary server 600 where the registration information is stored in a registered coupons and users database 672. The database 672 is administered by a registration kernel 664 of the proprietary server 600. Confirmation of activation of a coupon can be provided from the proprietary server 600 to the distribution server 400 through the proprietary server message send manager 674 and the distribution server message receive manager 546, if desired. The registration information is used by retail establishments to redeem activated coupons. A user presents either identification or coupon registration information (e.g. a registration number) at a POS terminal and the subject coupon is redeemed in conjunction with the purchase of the associated product or service. Confirmation of the validity of the coupon presented by the user can be obtained, for example, through the POS terminal from the distribution server or proprietary server at the time of coupon redemption. Alternatively, activated coupon information can be provided in advance to the retail establishment through any convenient means (e.g. electronic data transfer or email or even a fax list of active registration numbers), so that the retail proprietor can confirm the validity of a presented coupon. Information relating to the coupon redeemed (e.g. store information and user information) is forwarded to the proprietary server 600, either directly from the retail establishment or through the distribution server 400, for storage in a storage device 668 in conjunction with previously stored user registration information. This information may be used in targeted marketing campaigns.

Changes to the electronic coupon may be initiated at any time by the sponsor or by an authorized administering entity using the systems and methods described above. Additionally, offers relating to related electronic coupons and information can be forwarded to the device user via a narrowband channel (e.g. an SMS message).

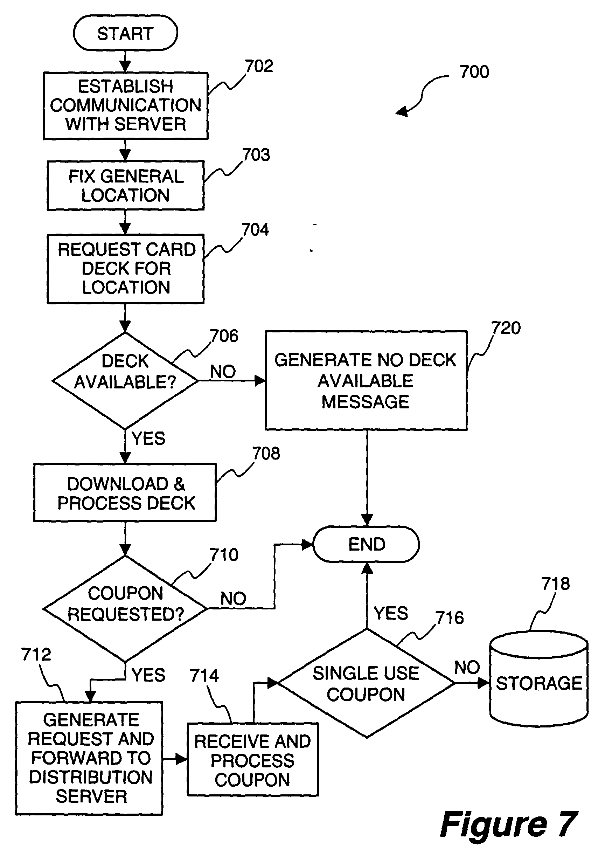

Figure 7 is a process flow chart which illustrates a process 700 which can be used by a mobile device 200 to generate a request for electronic coupons, according to one implementation of the present invention. At 702 a secure communications session is established between the requesting mobile device and the coupon distribution server (e.g. coupon distribution server 400 of Figure 1). Following establishment of the communications channel to the server (or before), the general location of the requesting mobile device is established at step 703. As discussed hereinabove, the location of the mobile device can be determined, for example, using GPS in the mobile device or can be determined and provided by the wireless communications network (e.g. VLR). Location information generated by network elements may be retrieved and inserted in the request by an intermediate server devices (e.g. Proxy Server 108 of Figure 1).

A request for coupon related content is presented at step 704, generated based on the present location of the requesting mobile device. The request is based on coupons corresponding to the geographic location established for the mobile device, and is referred to here as a "card deck" meaning a collection of indexed electronic coupon records. If, at step 706, it is determined that there is currently no coupon related content stored for the location provided then a message to that effect is generated at step 720 and the communications session is ended. If, on the other hand, coupon related content is identified, then it is forwarded by the coupon distribution server and downloaded by the requesting mobile device (step 708). The coupon related content may be in the form of markup language files containing selection lists which may be navigated by the user to select coupons of interest, as described hereinabove in relation to Figures 2A to 2E.

When a particular electronic coupon is selected(step 710) by the user, then a second request is forwarded from the mobile device to the coupon distribution server (step 712)for the coupon selected. Of course, as an alternative, the coupon information could be included in the information received from the distribution server in response to the first request for coupon related content. If this is the case then the requesting mobile device forwards a coupon registration request for the selected coupon to the coupon distribution server at step 712. The electronic coupon or registration confirmation for the requested coupon is received by the mobile device at step 714. The user of the mobile device then presents the electronic coupon (e.g. coupon registration number) to an associated retail establishment for redemption. One of ordinary skill in the art will understand that the entire process can also be conducted electronically. For example, upon receiving a discount coupon for a pizza, a user could order the pizza and redeem the coupon using the subject mobile device with the coupon information being provided to the retailer via data or voice communications channels.

If the requested coupon is a single use electronic coupon, as determined at step 714, then it is deleted after it is redeemed. This may be accomplished by deactivating the registration information held by the proprietary server and or sending an instruction to the subject mobile device to delete the redeemed coupon. This same process may be used when a time limited electronic coupon reaches its expiration date without being redeemed. Multiple use coupons may be stored and managed within the storage facilities (718) of the subject mobile device.

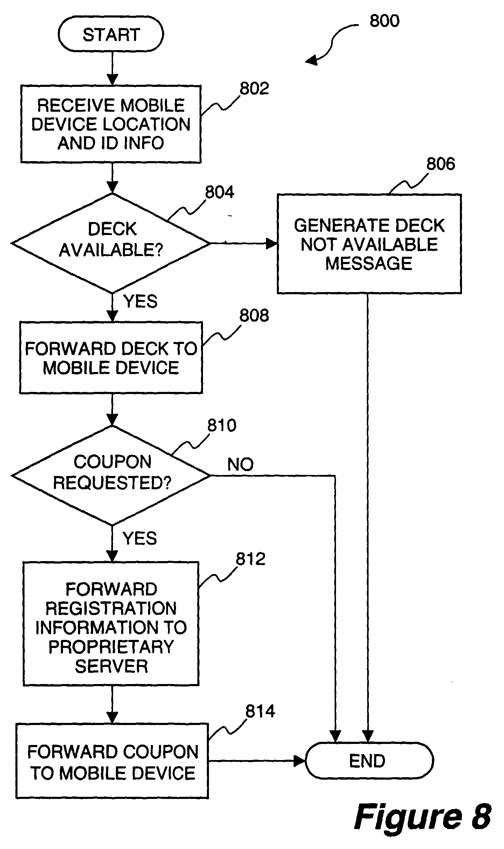

Figure 8 is a process flow chart illustrating a process 800 which can be used by a coupon distribution server 400 to process a request for electronic coupon related content from a mobile device. At 802 a request for coupon related content based on the location of the requesting mobile device is received. The request includes location information which, as previously mentioned, may be provided by the requesting mobile device (e.g. GPS) or by network element in the wireless communications system (e.g. VLR). At 804 it is determined whether the subject coupon distribution server (or a connected server) has coupon-related content for the general area associated with the location information provided. If there is not coupon related content available then a message to that effect is forwarded to the requesting mobile device at 806. If the coupon distribution server has coupon-related content for the general vicinity of the requesting mobile device, based on the location information provided, then that content is forwarded to the requesting mobile device (step 808). As previously stated the coupon related content may comprise markup language files used to select electronic coupons of interest. Additionally, the coupon related content may contain unregistered versions of the electronic coupons.

If the user of the requesting mobile device selects a particular electronic coupon from the coupon related content provided by the coupon distribution server then a request for that coupon is forwarded to the coupon distribution server and received at step 810. The request may be for provision of the selected electronic coupon or for registration of selected electronic coupons already stored on the requesting mobile device. Registration information for the user and selected coupon is forwarded to the proprietary server at 812. Requested coupons not already stored on the requesting mobile device are forwarded at 814. Upon completion of the coupon and user registration process, or if there are no coupons requested within a predetermined time period, then the communications session between the requesting mobile device and the coupon distribution server is terminated.

The user registration information may contain personal and financial information. Included in this information is contact information for the user such that the user may be contacted in the event of changes to the terms and conditions of the coupon or to notify the user of additional deals available.

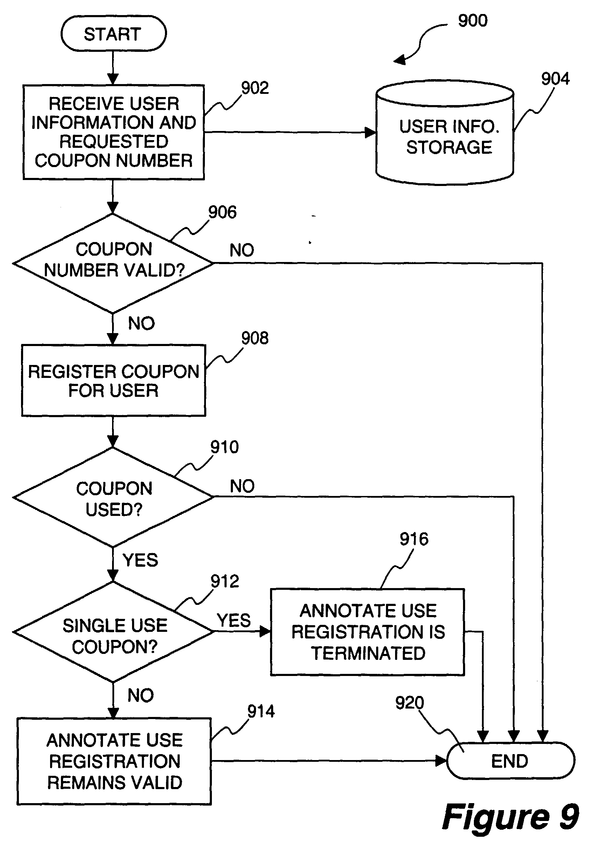

Figure 9 is a process flow chart illustrating a process 900 which may be used by a proprietary server 600 to register an electronic coupon for a user associated with a requesting mobile device 200. At 902 registration information for a selected electronic coupon and the user selecting the coupon is received, for example, from the coupon distribution server. The user information and information related to the coupon are saved at 904. At 906 a determination is made as to whether the coupon information received is valid, and if the received coupon information is not valid then the procedure 900 terminates at 920. At 908 the electronic coupon is registered for the user, for example by generating a unique registration number for that coupon and user. At 910 a search is made for any changes or modifications to the terms and conditions associated with the electronic coupon since it was assigned to the subject coupon distribution server. If there are changes then the user is notified using the contact information provided (e.g. an SMS message). At 912 a determination is made as to whether the coupon is a single use or multiple use coupon. Registration for single use coupons is terminated after their initial use (916). Registration information for multiple-use coupons is retained until their use index or expiration date is exceeded (914).

Changes to actively issued electronic coupons and additional offers may be initiated by the proprietary server. These changes may be forwarded to individual users or groups of user directly or using the coupon distribution server as an intermediary.

The present invention has been described in sufficient detail with a certain degree of particularity. It is understood to those skilled in the art that the present disclosure of embodiments has been made by way of example only and that numerous changes in the arrangement and combination of parts as well as steps are possible without departing from the spirit and scope of the invention as claimed. Accordingly, the scope of the present invention is defined by the appended claims rather than the foregoing description of one embodiment.

## Claims

1. A method for utilizing a two-way mobile communications device having a display and a user interface for coupon based commerce, the method comprising:-
storing coupon data relating to a plurality of available coupons from at least one sponsor;
forwarding a selected subset of the stored coupon data to a two-way mobile communications device; and
activating an available coupon for redemption at a corresponding vendor in response to a selection made by a user of the two-way communications device through the user interface thereof.

2. A method as claimed in claim 1, wherein the selected subset of stored coupon data is forwarded to the two-way mobile communications device in response to a request signal issued from the two-way mobile communications device and wherein said subset of the stored coupon data is selected on the basis of location data corresponding to the two-way mobile communications device.

3. A method as claimed in claim 2, wherein said location data is generated by a location indicating means incorporated in or attached to the two-way mobile communications device.

4. A system for coupon based commerce utilizing a two-way mobile communications device having a display and a user interface, the system comprising a coupon distribution server including a data storage device having a plurality of stored coupon records for available coupons from at least one sponsor, a communications interface for coupled for communication with a plurality of two-way mobile communications devices through a mobile communications network for receiving requests for coupon data from said two-way mobile communications devices and forwarding coupon data to said two-way mobile communications devices, and a processor for selecting at least one coupon record stored in the data storage device for forwarding corresponding coupon data to a said two-way mobile communications device in response to a request for coupon data from that two-way mobile communications device.

5. A system as claimed in claim 4, wherein said plurality of coupon records stored in the data storage device are geographically indexed according to geographic location of corresponding coupon redemption vendors.

6. A method for utilizing a two-way mobile communications device having a display and a user interface to retrieve electronic coupons said method comprising:-
generating a request for coupon-related content including a device identifier for a coupon distribution server;
forwarding said generated request to said coupon distribution server device identified by said device identifier;
receiving said coupon-related content wherein said coupon related content includes electronic coupons for a geographic area in proximity to the location of said two-way mobile communications device;
saving said received coupon-related content in said two-way mobile communications device; and processing said received coupon-related content.

7. A method as recited in claim 6, further comprising:
retrieving location information for said two-way mobile communications device; and
inputting user specific information; and
incorporating said retrieved location information and said user specific information in said generated request for coupon-related content.

8. A method as recited in claim 6 or 7 still further comprising:
receiving information relating to changes in the terms and conditions associated with said stored coupon related content;
modifying said stored coupon related content in accordance with said received information ; and
displaying content relating to said received information relating to changes in the terms and conditions associated with said stored coupon related content.

9. A method for utilizing a two-way mobile communications device having a display and a user interface to retrieve electronic coupons, said method comprising:-
receiving a request for coupon-related content from said two-way mobile communications including location information and user specific information;
identifying stored coupon-related content for a geographic area in proximity to said location information contained in said request; and
forwarding said identified coupon-related content to said two-way mobile communications device.

10. A method as recited in claim 9, still further comprising:-
forwarding said user specific information and identification information for said coupon-related content forwarded to said two-way mobile communications device to a proprietary server device.

11. A method for utilizing a two-way mobile communications device having a display and a user interface to retrieve electronic coupons, said method comprising:
receiving a plurality of geographically indexed electronic coupons from a plurality of sponsors;
organizing said received plurality of geographically indexed electronic coupons received from said plurality of sponsors by geographic regions and functional categories;
generating billing information for services associated with storing and distributing said geographically indexed electronic coupons received; and
forwarding said billing information to a billing entity wherein said billing information will be used to collect fees from said sponsors.

12. A system for utilizing a two-way mobile communications device having a display and a user interface to retrieve electronic coupons, said system comprising:
a storage device for storing coupon-related content;
a memory for storing program code for a processor;
a processor coupled to said storage device and said memory,
wherein said processor operates to execute said program code stored in said memory to generate a request for coupon-related content, forward said generated request to a coupon distribution server associated with a device identifier, receive said coupon-related content requested, store said received coupon related content and process said coupon related content.

13. A system for utilizing a two-way mobile communications device having a display and a user interface to retrieve electronic coupons, said system comprising:
a storage device for storing coupon-related content;
a memory for storing program code for a processor;
a processor coupled to said storage device and said memory,
wherein said processor operates to execute said program code stored in said memory to receive requests for coupon-related content from said two-way mobile communications device, process said received request, forward requested coupon-related content to said two-way mobile communications device, and register said forwarded coupon-related content with a proprietary server device.

14. A system for utilizing a two-way mobile communications device having a display and a user interface to retrieve electronic coupons, said system comprising:-
a storage device for storing electronic coupon identifiers and associated user information;
a memory for storing program code for a processor;
a processor coupled to said storage device and said memory,
wherein said processor operates to execute said program code stored in said memory to receive said electronic coupon identifiers and user information from a coupon distribution server and to register said electronic coupons so that they may be redeemed when said users associated with said user information redeem said electronic coupons.
